(19)

Europäisches
Patentamt
European
Patent Office
Office européen
des brevets

(11)     **EP 3 136 060 A1**

(12)     **EUROPEAN PATENT APPLICATION**

(43) Date of publication:
**01.03.2017   Bulletin 2017/09**

(51) Int Cl.:
*G01F 1/58* (2006.01)          *G01F 1/60* (2006.01)
*G01F 15/00* (2006.01)         *H02H 3/00* (2006.01)
*H02H 5/00* (2006.01)          *H02H 7/20* (2006.01)

(21) Application number: **16185060.7**

(22) Date of filing: **21.08.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.08.2015   KR 20150119970**

(71) Applicant: **Techcross Inc.
Seoul 135-879 (KR)**

(72) Inventors:
• PARK, Kyuwon
 135-879 Seoul (KR)
• KIM, Seongtae
 135-879 Seoul (KR)
• LEE, Haidon
 135-879 Seoul (KR)
• LEE, Gwangho
 135-879 Seoul (KR)

(74) Representative: **Spengler, Robert
Küfergasse 11
89073 Ulm (DE)**

(54)     **ELECTROMAGNETIC FLOW METER**

(57)     Provided is an electromagnetic flowmeter including: a coil configured to form a magnetic field as power is applied; an electrode configured to measure an electromotive force generated according to a flow rate passing through the magnetic field; an amplifying circuit unit configured to amplify the electromotive force measured at the electrode; and a relay unit which is provided between the electrode and the amplifying circuit unit and which is turned on or off.

FIG. 1

EP 3 136 060 A1

Description

BACKGROUND OF THE INVENTION

Field of the Invention

The present disclosure relates to an electromagnetic flow meter, and more particularly, to an electromagnetic flow meter which is capable of preventing an external high voltage shock due to thunderstroke or welding.

Description of the Related Art

An electromagnetic flow meter means a flow meter using an electromagnetic induction, which measures a flow based on a principle that an electromotive force proportional to a flow rate occurs in an electrode perpendicular to both of a nonmagnetic pipe and a conductive fluid due to an electromagnetic induction, when a voltage is applied so that a magnetic field is formed in perpendicular to the nonmagnetic pipe, and the conductive fluid is discharged.

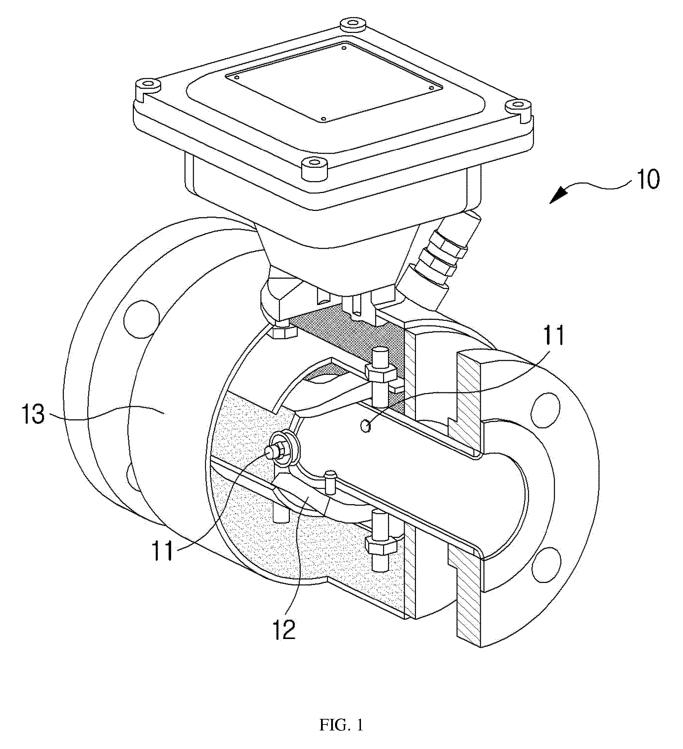

FIG. 1 is a diagram illustrating a configuration of a general electromagnetic flowmeter.

Referring to FIG. 1, the electromagnetic flowmeter 10 is mounted in one side of a pipe 11 in which a fluid flows, which is configured to include a plurality of electrodes 12 that are installed on the pipe 11, and a coil 13 which is disposed around the pipe 11.

When a conductive fluid flows with a flow rate u in the pipe 11, an electromotive force E may occur in the electrode 12 installed in the pipe 11, and, as the E is proportional to an average flow rate, when the E is amplified and recorded, the change in the flow rate can be seen continuously.

$$E = Bdu \times 10^{-8}$$

where, E: electromotive force [V], B: magnetic flux density [G], d: inner diameter of pipe [cm], $\upsilon$: flow rate [cm/s]

The electromotive force is generated normally with the level of 1mV and be amplified to process. In this case, typically, an operational amplifier (hereinafter referred to as 'OP AMP') is used as an amplifier circuit. By altering some elements, such as a resistor, a capacitor, a diode, and the like, connected to an external circuit of the operational amplifier, various linear or non-linear operations can be performed stably.

Since the pressure loss scarcely exits and the accuracy and the precision are high, such an electromagnetic flowmeter is widely used in various fields. However, since a semiconductor device which is sensitive to a voltage/current is used in order to achieve the accuracy, it is vulnerable to an external noise or shock. In particular, when the electromagnetic flowmeter is installed in a ship or a plant, it is exposed to a high-voltage shock such as thunderstroke or welding.

Since the OP AMP included in the electromagnetic flowmeter is configured by a transistor (TR) or a field effect transistor (FET), when a shock such as a noise or a high voltage is applied to an input side, there is a problem in that the probability of malfunction occurrence is increased.

In addition, an electrode and a coil configuring the electromagnetic flowmeter are connected to a body of the electromagnetic flowmeter to be mounted on the pipe. Since the pipe is normally configured by an iron which is a conductive material and the body of the electromagnetic flowmeter is composed of ferro-alloy such as SUS, the shock of a thunderstroke or a welding is transmitted well through the pipe. Thus, the shock which is transmitted to the electrode and the coil through the pipe is transmitted to a circuit of the electromagnetic flowmeter such that a defect in the electromagnetic flowmeters occurs.

SUMMARY OF THE INVENTION

The present disclosure has been made in view of the above problems, and provides an electromagnetic flowmeter which enables to protect an internal circuit of the electromagnetic flowmeter regardless of an external shock or noise such as a thunderstroke or a welding.

In accordance with an aspect of the present disclosure, an electromagnetic flowmeter includes: a coil configured to form a magnetic field as power is applied; an electrode configured to measure an electromotive force generated according to a flow rate passing through the magnetic field; an amplifying circuit unit configured to amplify the electromotive force measured at the electrode; and a relay unit which is provided between the electrode and the amplifying circuit unit and which is turned on or off.

BRIEF DESCRIPTION OF THE DRAWINGS

The objects, features and advantages of the present disclosure will be more apparent from the following detailed description in conjunction with the accompanying drawings, in which:

FIG. 1 is a diagram illustrating a configuration of a general electromagnetic flowmeter;
FIG. 2 is a block illustrating a relay unit and an amplifying circuit unit included in an electromagnetic flowmeter according to an embodiment of the present disclosure;
FIG. 3 is a flowchart illustrating an operation of an electromagnetic flowmeter according to an embodiment of the present disclosure;
FIG. 4 is a flowchart illustrating an operation of an electromagnetic flowmeter according to another embodiment of the present disclosure;

FIG. 5 is a flowchart illustrating an operation of an electromagnetic flowmeter according to still another embodiment of the present disclosure; and

FIG. 6 is a flowchart illustrating an operation of an electromagnetic flowmeter according to still another embodiment of the present disclosure.

## DETAILED DESCRIPTION OF EXEMPLARY EMBODIMENTS

Exemplary embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

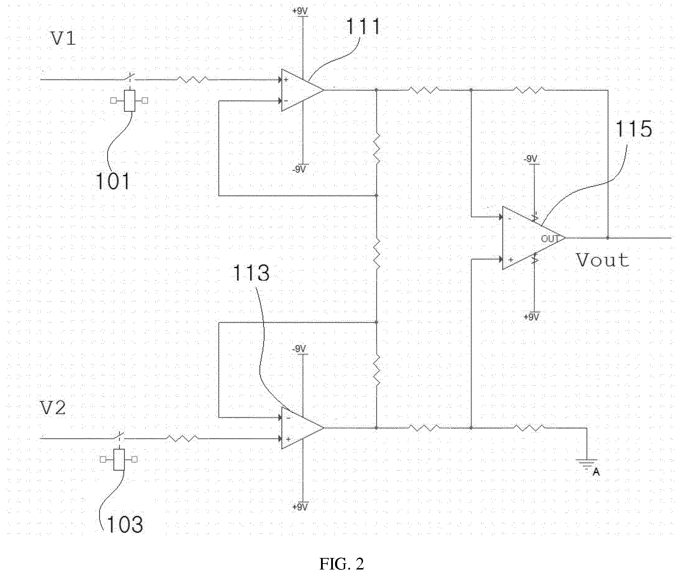

FIG. 2 is a block illustrating a relay unit and an amplifying circuit unit included in an electromagnetic flowmeter according to an embodiment of the present disclosure. As shown in FIG. 2, the electromagnetic flowmeter according to an embodiment of the present disclosure may include a coil (not shown) which forms a magnetic field as a power is applied, an electrode (not shown) which measures an electromotive force which is generated according to the flow rate passing through the magnetic field, a relay unit 101, 103 which is turned on or off (ON/OFF) according to a control signal, and a plurality of amplifying units 111, 113, 115 which amplifies a signal input from an input end connected to the electrode (not shown), such that an amplified signal (Vout) is outputted through an output end.

The relay unit included in the electromagnetic flowmeter may be provided between the electrode (not shown) and the amplifying circuit unit, and may include a first relay unit 101 and a second relay unit 103. The first relay unit 101 and the second relay unit 103 may be connected to electrodes V1 and V2 respectively. Each electrode may be installed on the pipe in which a fluid flows and may measure a voltage value which is changed according to the flow rate.

The relay unit 101, 103 included in the electromagnetic flowmeter according to an embodiment of the present disclosure may connect a signal inputted from the electrode (not shown) to the amplifying circuit unit, and may serve to protect an OP AMP connected to the electrode and a peripheral circuit.

That is, in the case of the electromagnetic flowmeter installed in a ship, since it may be exposed to a noise such as a thunderstroke stroke or a welding, it is possible to prevent the noise signal inputted from the electrode (not shown) when the relay unit 101, 103 maintains an OFF state at the time when a probability of the occurrence of the thunderstroke or the welding is high. The time when a probability of the occurrence of a noise is high is usually the time when the ship sails or is under repair such that the electromagnetic flowmeter is not used.

Therefore, only when the electromagnetic flowmeter is actually used, relay unit 101, 103 may maintain the ON state to connect the electrode and the amplifying circuit unit. On the other hand, when the electromagnetic flowmeter is not used, the relay unit 101, 103 may be turned off so that it is possible to significantly reduce the defects that may be generated in the electromagnetic flowmeter.

Here, after the relay unit 101, 103 between the electrode (not shown) and the amplifying circuit unit is turned off, the electromotive force may be measured to correct a zero point of the electromagnetic flowmeter. That is, when the relay unit 101, 103 is turned off, only the offset value of the amplifying circuit unit is measured, so that it is possible to correct the error caused by the resistance value of the amplifying circuit unit.

Meanwhile, another embodiment of the present disclosure may provide an electromagnetic flowmeter which includes a coil which forms a magnetic field as a power is applied, an electrode which measures an electromotive force which is generated according to the flow rate passing through the magnetic field, a coil driving unit which drives the coil, and a relay unit which is installed between the coil and the coil driving unit and which is turned on or off. In this case, it is possible to prevent the noise caused by a thunderstroke or a welding from flowing into the coil driving unit through the coil by turning the relay unit on/off.

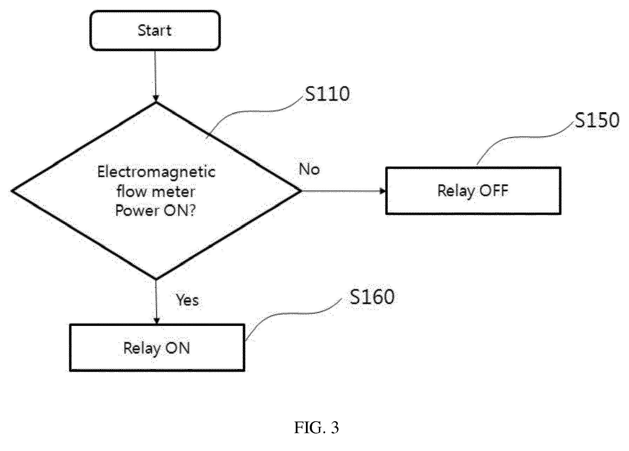

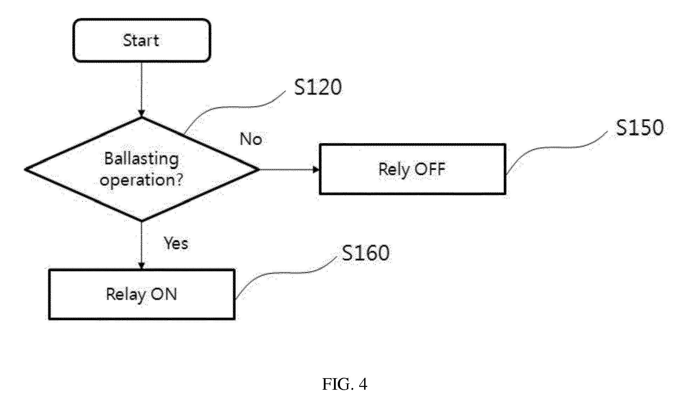

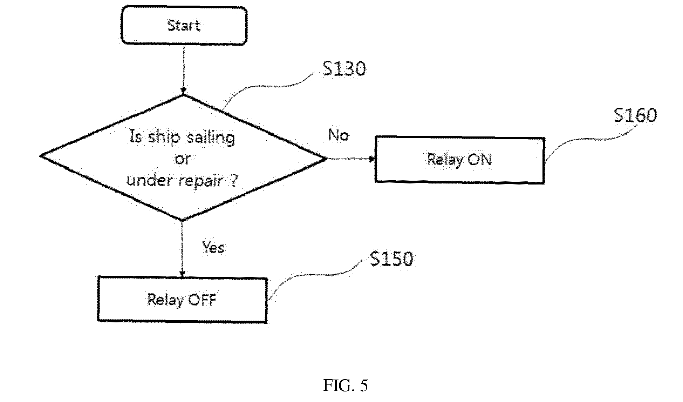

FIG. 3 is a flowchart illustrating an operation of an electromagnetic flowmeter according to an embodiment of the present disclosure, FIG. 4 is a flowchart illustrating an operation of an electromagnetic flowmeter according to another embodiment of the present disclosure, and FIG. 5 is a flowchart illustrating an operation of an electromagnetic flowmeter according to still another embodiment of the present disclosure

Referring to FIGS. 3 to 5, the electromagnetic flowmeter according to embodiments of the present disclosure may be configured to turn the relay unit on/off according to a specific condition.

FIG. 3 discloses an operation of turning the relay unit on/off according to the power state of the electromagnetic flowmeter. First, it is determined whether the power of the electromagnetic flowmeter is turned on (S110), and turns the relay unit on when the power of the electromagnetic flowmeter is turned on (S160), and turns the relay unit off when the power of the electromagnetic flowmeter is not turned on (S150).

Here, the relay unit 101, 103 may select a normal open type such that the switch of the relay unit is turned off when the electromagnetic flowmeter is turned off. In this case, the relay unit may operate according to the state of the power without the need of a separate control signal. In addition, a controller for controlling the power of the electromagnetic flowmeter to be turned on/off may be separately provided to control the power of the electromagnetic flowmeter. In this case, the controller generates an on/off control signal so that the power of the electromagnetic flowmeter is turned off when the ship sails or is under repair, and the power of the electromagnetic flowmeter is turned on when the ship performs a ballasting operation. Then, the relay unit 101, 103 receives the generated control signal and the relay unit 101, 103 is turned on/off according to the control signal.

Meanwhile, the relay unit 101, 103 may be controlled from the outside by a control signal to turn the relay unit on/off regardless of the state of the power. In this case, the control signal, i.e., an on/off control signal may be transmitted by using a wireless communication method, for example, a short-range wireless communication such as WiFi, Bluetooth. Further, the control signal may be transmitted through a wire. In this case, it is possible to generate a on/off control signal through a dry contact switch.

For example, the relay unit 101, 103 may be controlled to be turned on by giving a command in a wireless communication or generating a control signal by turning the dry contact switch on in order to measure the electromagnetic flowmeter in an equipment for monitoring the electromagnetic flowmeter at the time when the electromagnetic flowmeter is to be measured.

The dry contact switch may be wired to be always turned on, and in this case, like a normal electromagnetic flowmeter, the measurement starts when power is turned on, and it operates in the same manner as the method of operating the relay unit 101, 103 according to the state of power as described above.

FIG. 4 and FIG. 5 illustrate an operation of controlling the relay unit 101, 103 by a control signal. FIG. 4 illustrates an operation of the relay unit 101, 103 according to the ballasting operation. That is, it is determined whether the ballasting operation is being performed (S120), and a controller (not shown) generates a control signal which turns the relay unit on when the ballasting operation is being performed (S160), and which turns the relay unit off when the ballasting operation is not being performed (S150). Since the electromagnetic flowmeter should be operated during the ballasting operation, the controller (not shown) generates a control signal to turn the relay unit on when the ballasting operation is being performed.

Meanwhile, in FIG. 5, it is determined whether the ship is sailing or is under repair (S130), and, when the ship sails or is under repair, the probability of the occurrence of the noise is high and the electromagnetic flowmeter is not used, the relay unit is controlled to be turned off (S150), and, when the ship does not sail or is not under repair, the relay unit is controlled to be turned off (S160).

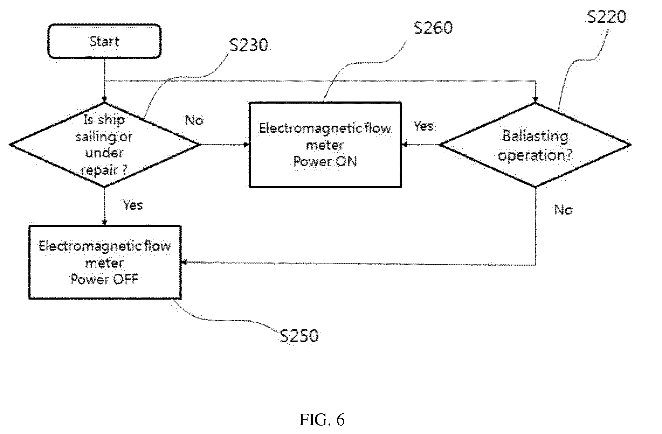

FIG. 6 is a flowchart illustrating an operation of an electromagnetic flowmeter according to still another embodiment of the present disclosure. In the still another embodiment of the present disclosure shown in FIG. 6, the relay unit may be excluded from the configuration of the electromagnetic flowmeter. That is, the still another embodiment of the present disclosure is configured to control the power of the electromagnetic flowmeter only depending on whether a certain condition is satisfied regardless of the existence of the relay unit.

In this embodiment, it is determined whether the ship is sailing or is under repair (S230), and based on the determination result, the power of the electromagnetic flowmeter is controlled to be turned on (S260), or turned off (S250).

In addition, it is determined whether the ballasting operation is being performed (S220), and based on the determination result, the power of the electromagnetic flowmeter is controlled to be turned on (S260), or turned off (S250).

Such an on/off control method may be achieved with a controller for generating an on/off control signal, and may be configured to transmit acontrol signal generated through the above-described wireless communication method or a wired communication method to a power supply unit of the electromagnetic flowmeter.

According to the present disclosure, a relay unit is provided to be controlled to be turned on/off according to the need so that it is possible to protect the internal circuit of the electromagnetic flowmeter.

In addition, according to the present disclosure, a controller is provided to control the power of the electromagnetic flowmeter to be turned on/off according to the need so that it is possible to protect the internal circuit of the electromagnetic flowmeter.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. An electromagnetic flowmeter comprising:

   a coil configured to form a magnetic field as power is applied;
   an electrode configured to measure an electromotive force generated according to a flow rate passing through the magnetic field;
   an amplifying circuit unit configured to amplify the electromotive force measured at the electrode; and
   a relay unit which is provided between the electrode and the amplifying circuit unit and which is turned on or off.

2. An electromagnetic flowmeter comprising:

   a coil configured to form a magnetic field as power is applied;
an electrode configured to measure an electromotive force generated according to a flow rate passing through the magnetic field;
a coil driving unit configured to drive the coil; and
a relay unit which is provided between the coil and the coil driving unit and which is turned on or off.

3. The electromagnetic flowmeter of claim 1 or claim 2, wherein the relay unit is turned on or off according to a control signal, and the control signal is generated through a wireless communication or a dry contact switch.

4. The electromagnetic flowmeter of claim 1 or claim 2, wherein the relay unit is turned on when the power of the electromagnetic flowmeter is turned on, and is turned off when the power of the electromagnetic flowmeter is turned off.

5. The electromagnetic flowmeter of claim 3, wherein the control signal is generated as an off-signal when a ship sails or is under repair, and is generated as an on-signal when the ship performs a ballasting operation.

6. The electromagnetic flowmeter of claim 4, further comprising a controller which controls the power of the electromagnetic flowmeter to be turned off when a ship sails or is under repair, and controls the power of the electromagnetic flowmeter to be turned on when the ship performs a ballasting operation.

7. The electromagnetic flowmeter of claim 1, wherein a zero point correction is performed when the relay unit is turned off.

8. An electromagnetic flowmeter comprising:

a coil configured to form a magnetic field as power is applied;
an electrode configured to measure an electromotive force generated according to a flow rate passing through the magnetic field;
an amplifying circuit unit configured to amplify the electromotive force measured at the electrode; and
a controller which controls the power of the electromagnetic flowmeter to be turned off when a ship sails or is under repair, and controls the power of the electromagnetic flowmeter to be turned on when the ship performs a ballasting operation.

FIG. 1

FIG. 2

FIG. 3

Start

S120

Ballasting operation?

No

Rely OFF

S150

Yes

Relay ON

S160

FIG. 4

FIG. 5

FIG. 6

Europäisches
Patentamt

European
Patent Office

Office européen
des brevets

# EUROPEAN SEARCH REPORT

Application Number

EP 16 18 5060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S57 42812 A (HOKUSHIN ELECTRIC WORKS) 10 March 1982 (1982-03-10) | 1,7 | INV.<br>G01F1/58 |
| Y | * figure 1 *<br>* abstract * | 3-6,8 | G01F1/60<br>G01F15/00 |
| | ----- | | H02H3/00 |
| X | US 4 370 892 A (SCHMOOCK ROY F) 1 February 1983 (1983-02-01) | 2 | H02H5/00<br>H02H7/20 |
| Y | * figure 1 *<br>* column 4, line 25 - line 30 *<br>* column 4, line 39 - line 42 *<br>* column 4, line 46 - line 58 * | 3-6 | |
| | ----- | | |
| Y | US 2013/062290 A1 (CAO XUELEI [CN] ET AL) 14 March 2013 (2013-03-14)<br>* figure 1 *<br>* [0053] & [0065] * | 3-6,8 | |
| | ----- | | |

TECHNICAL FIELDS
SEARCHED     (IPC)

G01F
H02H

The present search report has been drawn up for all claims

| Place of search | Date of completion of the search | Examiner |
|---|---|---|
| The Hague | 6 January 2017 | Stitou, Adel |

EPO FORM 1503 03.82 (P04C01)

## ANNEX TO THE EUROPEAN SEARCH REPORT
## ON EUROPEAN PATENT APPLICATION NO.

EP 16 18 5060

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2017

| Patent document cited in search report | | Publication date | Patent family member(s) | Publication date |
|---|---|---|---|---|
| JP S5742812 | A | 10-03-1982 | NONE | |
| US 4370892 | A | 01-02-1983 | NONE | |
| US 2013062290 | A1 | 14-03-2013 | CN 101786748 A | 28-07-2010 |
| | | | EP 2540678 A1 | 02-01-2013 |
| | | | JP 5746750 B2 | 08-07-2015 |
| | | | JP 2013523426 A | 17-06-2013 |
| | | | KR 20130012006 A | 30-01-2013 |
| | | | SG 181987 A1 | 30-08-2012 |
| | | | US 2013062290 A1 | 14-03-2013 |
| | | | WO 2011120250 A1 | 06-10-2011 |

EPO FORM P0459

For more details about this annex : see Official Journal of the European Patent Office, No. 12/82